# EUROPEAN PATENT APPLICATION

(11) **EP 1 158 446 A2**
(43) Date of publication of application: **28.11.2001**
(21) Application number: 01870102.9
(22) Date of filing: 14.05.2001
(51) Int. Cl.: G06F 17/60

(54) **Method and apparatus for unified message storage and delivery system**

(30) Priority: 12.05.2000 US 569646
(71) Applicant: Tornado Development, Inc., El Segundo, CA 90245 (US)
(72) Inventor: Torf, Kevin R., El Segundo, CA 90245 (US); Kim, Ryan T., El Segundo, CA 90245 (US)
(74) Representative: Overath, Philippe

(57) **Abstract**

A unified messaging system includes a means for receiving a message at a unified messaging computer server, a first translation means is coupled to the means for receiving, the translation means translating the message into a neutral object, a storage means is coupled to the computer server for storing said neutral object, a retrieval means for retrieving said neutral object from said storage means is coupled to said computer server, and a second translation means for converting said neutral object into a message having a form desired by an intended recipient is coupled to said computer server.

## Description

### BACKGROUND OF THE INVENTION

### 1. Field of the Invention

The present invention relates to the field of systems for the storage and manipulation of messages, and more particularly to an unified messaging system which can be used to store and retrieve messages in a variety of different formats.

### 2. Prior Art.

It is known in the art to provide systems and methods for message storage and retrieval. Unified messaging refers to a concept that provides for a single electronic mailbox for different types of messages. The mailbox can be located on a user's host computer. Alternatively, the mailbox may be accessible over a telephone line. In either case, a user has consisted facilities available to originate, receive and manipulate messages. Messages can be translated from one media to another, and a single message may be composed of parts that use different native media.

Figure A illustrates a messaging system 10 which is typical of the prior art. In this scheme messages are generated using any one of several well Known devices. These devices are collectively referred to by reference numeral 12. The device which generates the message can include a computer email system, a telephone, a fax machine or a pager. The message is transmitted via a standard communication means 14 to a dedicated computer system 16. The communication means is typically a telephone network. Figure A illustrates the use of the Internet to deliver the messages to the computer system 16. The computer system 16 will then identify each message, and translate it for storage. In the prior art, the message was reproduced and stored multiple times. For example, if the message was originally in the form or a voice message, it would be saved in both a voice and text format. The used would then select the format of the message to retrieve. The computer system would then retrieve the message in its selected format from the appropriate database.

This system is ineffioient and contains many limitations. Most significantly, an incoming message must be translated and stored multiple times, depending on the number of message formats which are supported. This results in a duplication of messages, and computer system execution time. Storing each message in multiple formats requires an increase in necessary storage hardware, with a corresponding increase in costs.

### SUMMARY OF THE PRESENT INVENTION

The present invention provides a unified messaging system which overcomes the limitations of the prior art. With the present invention, a message system is provided which is able to accept messages from a variety of different sources in a variety of formats (text, email, voice, pager, etc.). Each message is transmitted to a central computer server. The messages is translated into a neutral object which is stored in a database. The translation is accomplished by means of computer software. The neutral object has a structure which is independent of the format of the original message. The neutral object is then stored in a central database. Each message is therefore stored only once, unlike the systems of the prior art. The message can be retrieved from the central database in any format, and retrieval is not limited to the original format of the message. This is accomplished by fetching the neutral object from the database. Computer software then translates the neutral object into the desired message format, and the message is delivered to the intended recipient.

### BRIEF DESCRIPTION OF THE DRAWINGS

Figure A is general block diagram of a messaging system known in the prior art.
Figure 1 is a general block diagram of the system of the present invention.
Figure 2 is a general flow chart of the steps followed in the message storage method employed by the present invention.
Figure 3 is a general flow chart of the steps followed in the message retrieval method employed by the present invention.

### DETAILED DESCRIPTION OF THE PREFERRED EMBODIMENT

An method and apparatus for a unified message storage and delivery system will be described. In the following description, for the purposes of explanation, specific construction details, arrangements, and materials are set forth in order to provide a more thorough understanding of the present invention. It will be apparent to those skilled in the art, however, that the present invention may be practiced without these specific details. In other instances, well known manufacturing methods and structures have not been described in detail so as not to obscure the present invention unnecessarily.

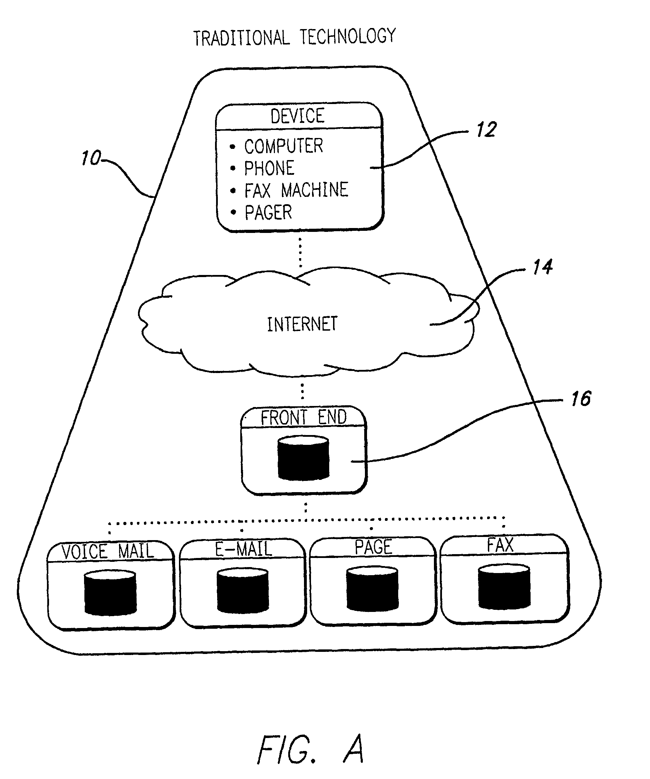

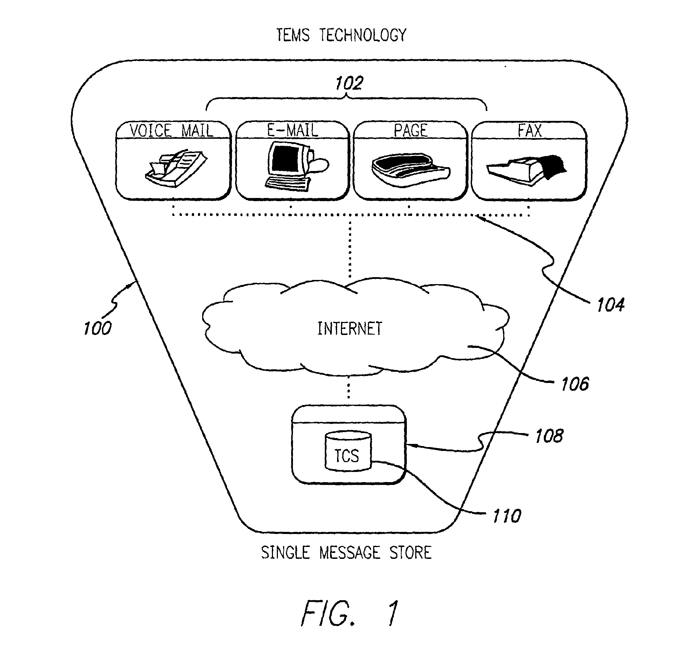

Referring first to Figure 1, a general block diagram of the system of the present invention is shown. In this Figure, the system of the present invention is generally referred to by reference numeral 100. In the present invention, a message which is to be delivered to a user is generated using any one of standard, existing technologies. In figure 1, the message generating devices are collectively referred to with reference numeral 102. The preferred embodiment of the present invention contemplates that the message will be generated by voicemail, email, pager or fax. It has been found that these types of messages are most often used in normal business communications. Figure 1 illustrates these specific types of messaging devices. It will be apparent to those skilled in the art, however, that other types of messages can be utilized by the system of the present invention without departing from the overall spirit and scope of the present invention.

Referring again to Figure 1, the message is transmitted via communication lines 104 over the Internet 106 to the computer system 108. The computer system 108 receives each message, and translates the message into a specific format for storage in a unified database 110. The system of the present invention translates each message into a neutral object (not illustrated in Figure 1), which can be stored in the database in a format which is independent of the format of the originating message. This permits the message to be stored and manipulated, regardless of the format of the original message.

A user can retrieve any message which is stored in the database 100. This is accomplished by requesting that a message be retrieved and sending that request to the computer server 108. The user specifies the format in which the message be retrieved. The computer server will then fetch the neutral object which is associated with the message from the database 110. The computer system translates the message into the desired format, and the message is delivered to the user.

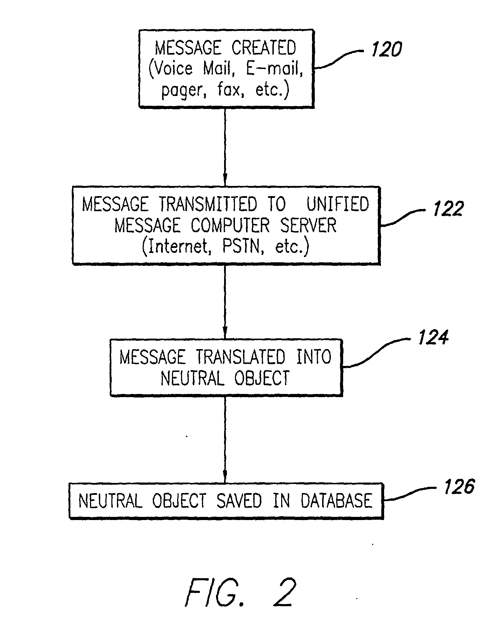

Referring next to Figure 2, a general flow chart of the steps followed in the message storage method employed by the present invention is illustrated. At step 120, a message which is intended to be delivered to a user or recipient is generated. *As* discussed above with respect to figure 1, the message can be generated using a wide range of existing technologies. The message is transmitted in step 122 using any appropriate technology. In the preferred embodiment of the present invention, the message is transmitted using the Internet. Other transmission technologies can also be used without departing from the overall spirit and scope of the present invention. The message is received by a unified message computer server, as illustrated.

Referring again to figure 2, the method employed in the present invention then utilizes the computer server uses a translation mechanism to convert the message from its original format into a neutral object. This is shown in step 124. The neutral object has a structure and format which allows it to be easily manipulated. Finally, in step 126, the neutral object is stored in a database. The neutral object is retained in the database until it is retrieved by a user, or deleted.

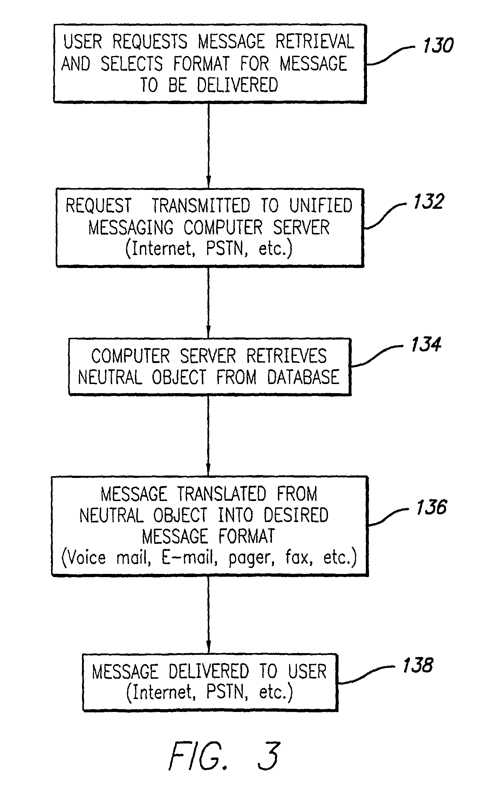

Referring next to Figure 3, a general flow chart of the steps followed in the method of retrieving messages employed by the present invention is illustrated. At step 130, a user who desires to retrieve a message will select the message format in which they desire to receive the message. This desired format is transmitted to the unified messaging computer server in step 132. As with the method of message storage, the request is transmitted using any available technology. In the preferred embodiment, the Internet is used to transmit the message request. The computer server then retrieves the neutral object associated with the desired message from the database in step 134. In step 136, the computer server translates the neutral object into the message format which is desired by the user. The message can be manipulated before it is delivered to the user. For example, the message can be translated into a different language, or it may be encrypted to protect critical and sensitive information that may be in the message. Finally, in step 138, the message is transmitted to the user. In the preferred embodiment, the message is transmitted to the user over the Internet.

Figures 2 and 3 illustrate the major steps used in the method of the present invention. These are not intended to be an exhaustive list of all steps which may be employed in the present invention. It will be apparent to those skilled in the art that other, additional steps may be included in the method. For example, supplemental information (such as a date/time stamp or billing data) may be added to the message either before or after it is translated in to the neutral object. Figures 2 and 3 are merely intended to give an overview of the basic steps of the method used in the present invention to receive, store and retrieve messages.

The foregoing description has made reference to a neutral object with is stored in a database that is employed by the present invention. A more detailed description of the neutral object will now be given. The method of the present invention utilizes the fact that all messages, regardless of their format or message type, can be separated into two basic components: header information and body information.

The header of a message includes information concerning the routing and delivery of the message. The body includes the actual information that is being transmitted with the message. Among the information which is typically found in a message header are the sender identity, recipient identity, delivery route, time of message and size of the message. Other information which is independent of the content of the message can also be present in the header. For example, tha header can indicate if the message is encrypted or in plain text, and can also include billing information for the user's account.

The body of the message includes the actual information which is being transmitted by the sender of the message. This can include, for example, text information or graphic information. The body of the message can also include attachments or other files which are to be transmitted with the message. It will be noted that the header of the message is typically independent of the body, or content, of the message. One beneficial feature of the header/body dichotomy is that only the sender and the intended recipient need to have access to the body of the information. Only the header information needs to be publicly available in order to deliver the message.

Referring again to Figure 2, the step of translating the message to the neutral object is shown in step 124 of the flow diagram. In this step, the message is translated into the neutral object before it is stored in a computer database. This translation process is conducted in a manner which is independent of the message format and content. The present invention is intended to be used in a computer system, therefore the translation process in the preferred embodiment is accomplished through appropriate computer software.

The translation of the message into the neutral object begins by separation of the header and body information. The messages which are received from the computer system are delivered in a known format. For example, an email message will be transmitted in a format which is compatible with industry standards. Other message formats also have a known structure which can be easily recognized. The incoming message is examined to determine what type of message it is. The required header information is then extracted and collected separately. The remaining body information is then associated with the header in a predetermined format. The body information is then translated from its original format into a predetermined type which is format-independent, The header with the translated body information together make up the neutral object. As was discussed above, the header is then stored in the database for later retrieval.

The description of the present invention given above discusses the translation mechanism between messages and the neutral objects. The translation is implemented by means of computer software. The description above suggests that the translations means are incorporated into, *or* a part of the computer server. It is anticipated, however, that the translation means may be distributed on computer systems which are physically distant from the unified messaging computer server. The software code for the translation is designed to be modular. Thus, it can be easily placed anywhere where it can be connected to the central server. When, as in the preferred embodiment of the present invention, the Internet is used as the transmission medium, the translation means can be located virtually anywhere.

The description of the present invention has been made with respect to specific arrangements and constructions of an improved towel. It will be apparent to those skilled in the art that the foregoing description is for illustrative purposes only, and that various changes and modifications can be made to the present invention without departing from the overall spirit and scope of the present invention. The full extent of the present invention is defined and limited only by the following claims.

## Claims

1. A unified messaging system, comprising:
means for receiving a message at a unified messaging computer server;
first translation means coupled to said means for receiving, said translation means translating said message into a neutral object;
storage means coupled to said computer system for storing said neutral object in a database;
retrieval means for retrieving said neutral object from said storage means;
second translation means for converting said neutral object into a message having a form desired by an intended recipient.
